# EUROPEAN PATENT SPECIFICATION

(11) **EP 1 647 180 B1**
(45) Date of publication and mention of the grant of the patent: **21.05.2008**
(21) Application number: 05109486.0
(22) Date of filing: 12.10.2005
(51) Int. Cl.: A01G 9/08, A01G 9/10

(54) **Device, assembly and method for filling a container with substrate**
Vorrichtung, Anordnung und Verfahren um einen Behälter mit Substrat zu füllen
Dispositif, arrangement et procédé pour remplir un conteneur du substrat

(30) Priority: 13.10.2004 NL 1027232
(43) Date of publication of application: 19.04.2006
(73) Proprietor: van der Burg, William, 2201 EP Noordwijk (NL)
(72) Inventor: van der Burg, William, 2201 EP Noordwijk (NL)
(74) Representative: van Westenbrugge, Andries

(56) References cited:
- WO-A-01/58248
- DE-U1- 9 211 099
- FR-A- 2 583 951
- NL-A- 8 702 850
- NL-C2- 1 018 278
- US-A- 4 020 881
- US-A- 5 241 917
- US-A1- 2003 196 373

## Description

The present invention relates to a device according to the preamble of Claim 1. Such a device is disclosed in WO 01/58248 on a pot plant in which a cutting has already been entered as last layer bark is provided at the dead end a pot plant is rotated on a conveyor.

In NL 8702850 a device is described for filling a plant pot with substrate and then making a hole in the soil introduced in this way.

With this device a large amount of soil is introduced into the container with the aid of a filler funnel in a step during transport. Downstream thereof an opening is made with the aid of a punch.

The conveyor used for this purpose will operate intermittently both for depositing the material into the pot and for making the opening.

US 4,020,881 discloses a method for filling containers.

NL 1018278 C2 describes an introduction device for cuttings.

FR 2,583,951 relates to automatically seeding.

The aim of the present invention is to provide uniform filling of the containers at entering of cuttings.

This aim is realised with an assembly having the characteristics according to Claim 1. The container can be filled in a simple manner all round by applying a rotary movement.

According to a particular embodiment of the invention the conveyor comprises two spaced apart belts.

As a result of the use of belts between which the containers, such as pots or trays, can be accommodated, functioning of the conveyor will not be affected when soil is spilt. The belts are preferably elastic and are able to adapt to the prevailing conditions. According to a further advantageous embodiment of the invention the distance between the belts is adjustable. By moving the belts closer together and further apart pots or other containers of different sizes can be processed without too many problems with the device according to the invention. Such an adjustment can be made by hand or by means of a motor and does not require the need for separate parts which can get lost.

According to an advantageous embodiment the adjustment of the belts is such that the two of these can be moved with respect to the original centre line, so that this centre line is retained as axis. As a result it is not necessary to make changes in the positioning of the various stations.

Apart from the station described above for introducing substrate, it is possible to install the stations for drilling openings.

The station for introducing substrate can be embodied to introduce soil or to introduce bark or any other substrate.

The station for drilling can be constructed in any way known in the state of the art. According to a particularly advantageous embodiment this consists of a crank mechanism to which a reciprocating drill is connected.

The introduction of cuttings or other plants can be made in the opening drilled in this way.

According to the invention the device is, however, provided with a conveyor for cuttings that is installed at the substrate introduction station and is provided with a engaging, moving and positioning member for cuttings embodied to move linearly and synchronously with said linear conveyor and wherein said engaging, moving and positioning member for cuttings and said linear conveyor can move towards one another. That is to say a cutting or other plant is positioned in the container at the same time as or before filling. According to a preferred embodiment such a cutting or other plant is gradually moved into the container from above while engaged, whilst filling with substrate also takes place at the same time. If sufficient material has been deposited into the container, the engagement between the cutting or other plant and the engaging, moving and positioning member for cuttings will be released. In this way pots can be continuously filled with both soil and a plant, a drilling station and subsequent station for positioning cuttings being superfluous. This furthermore has the advantage that no compaction of the substrate takes place during drilling.

According to an advantageous embodiment of the invention both the container and the cutting are rotated as they move towards one another. By this means it can be ensured that all-round filling of the pot with substrate takes place. As a result uniform distribution of substrate in the pot can be ensured. Furthermore, this has the advantage that covering of (the leaves of) the plant by substrate is prevented, which can be disadvantageous for the further development of the plant. With the construction according to the invention it is possible to provide continuous filling of the containers, that is to say it is not necessary to stop the conveyor at the filling station. As a result positioning errors are avoided and the throughput speed can be appreciably increased. Spilt material can be recycled in a simple manner and still used for filling. This continuous movement is preferably combined with continuous movement for the introduction of the cuttings (with or without plug) or other plant in the container during filling.

The containers can comprise pots or trays. Trays are understood to be rectangular containers, which may or may not be provided with internal divisions for accommodating different plants.

The invention will be explained in more detail below with reference to an illustrative embodiment shown in the drawing. In the drawing:
Fig. 1 shows, diagrammatically, a plan view of the device according to the present invention, where specific parts have been omitted for clarity;
Fig. 2 shows a cross-section along the line II-II when filling with potting compost;
Fig. 3 shows a cross-section along the line III-III;
Fig. 4 shows a cross-section along the line IV-IV in Fig. 1, where the possibility for adjustment of the belts is shown;
Fig. 5 shows a variant of the substrate filling station 9 in side view;
Fig. 6 shows a variant of the present invention in side view; and
Fig. 7 shows, diagrammatically, various stages in introducing a plant into a container according to the variant in Fig. 6.

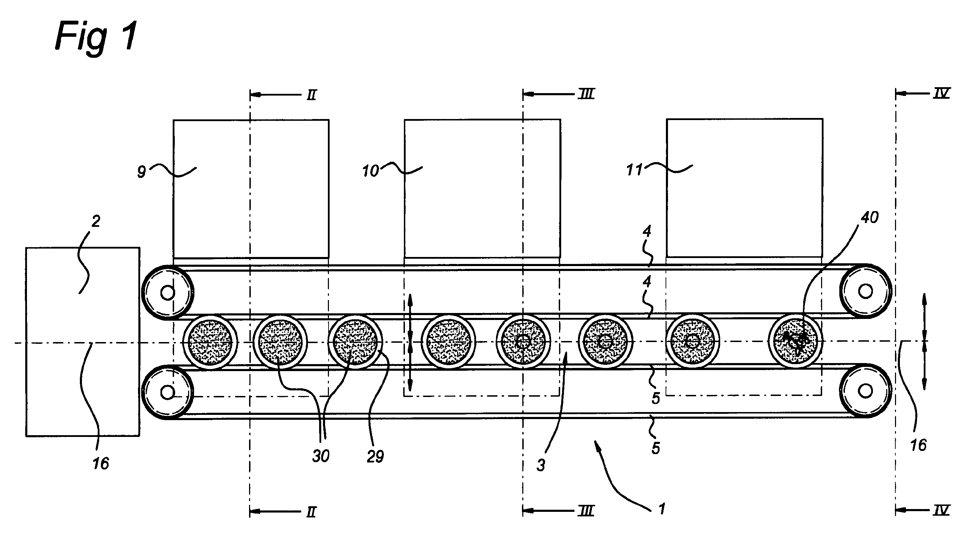

In Fig. 1 an embodiment of the device according to the present invention is indicated in its entirety by 1. This consists of a station 2 for storing and then individualizing pots 30. These are fed to conveyor 3 according to the invention, which consists of two belts 4, 5 located some distance apart. The belts are preferably square or rectangular, wherein the side thereof facing the container is somewhat oblique with respect to the vertical in order to provide as large as possible a contact surface with the edge of the container. The various features will be made to suit the construction of the raised rim of the pot and the part immediately beneath this.

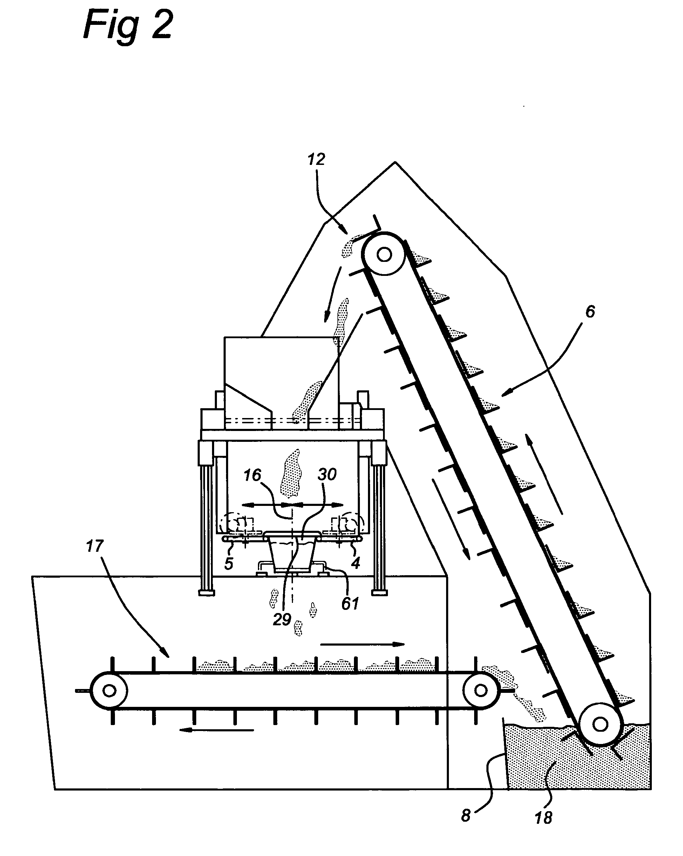

As can be seen from Fig. 2 et seq., the pots 30 are provided with a protruding rim 29 that bears on the belts 4 and 5, respectively. The centre line between the belts 4 and 5 is indicated by axis 16.

There are stations 9 - 11 along the conveyor 3. Station 9 is a filling station. Station 10 is a drilling station, whilst station 11 is a cutting introduction station. Details of the stations are shown in the further figures. The details of station 9 are given in Fig. 2. This consists of a feed conveyor 6 that ends in a bunker 8 filled with soil 18. There is a return conveyor 17 to return spilt soil to bunker 8. The discharge of feed conveyor 6 is indicated by 12 and emerges above the pots 30. There can optionally be a vibrating device, which is not shown, beneath the pots 30 to vibrate the substrate introduced. The substrate introduced can, for example, be potting compost.

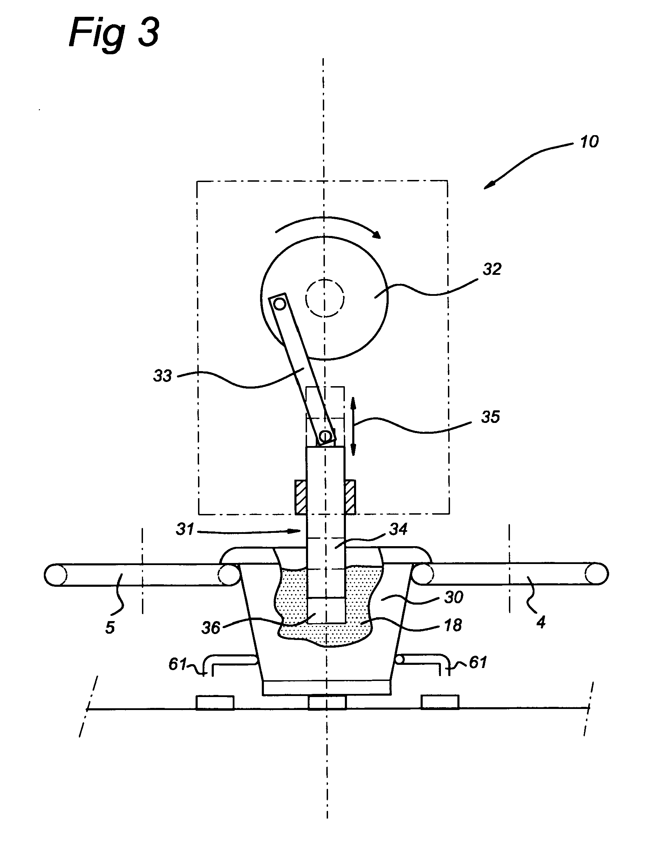

A drilling station is indicated by 10. Details of this can be seen in Fig. 3. The drilling station consists of a drill 31 with a crankshaft 32 with arm 33 connected to a drilling rod 34. When the crankshaft 32 turns the drill 34 executes a reciprocating movement in the direction of the arrow 35, as a result of which openings are pressed into substrate 18 provided in pots 30. This opening is indicated by 36. A cutting 40 can then be placed in such an opening, as is shown diagrammatically in Fig. 1. Holes can be drilled rapidly with such a drilling device.

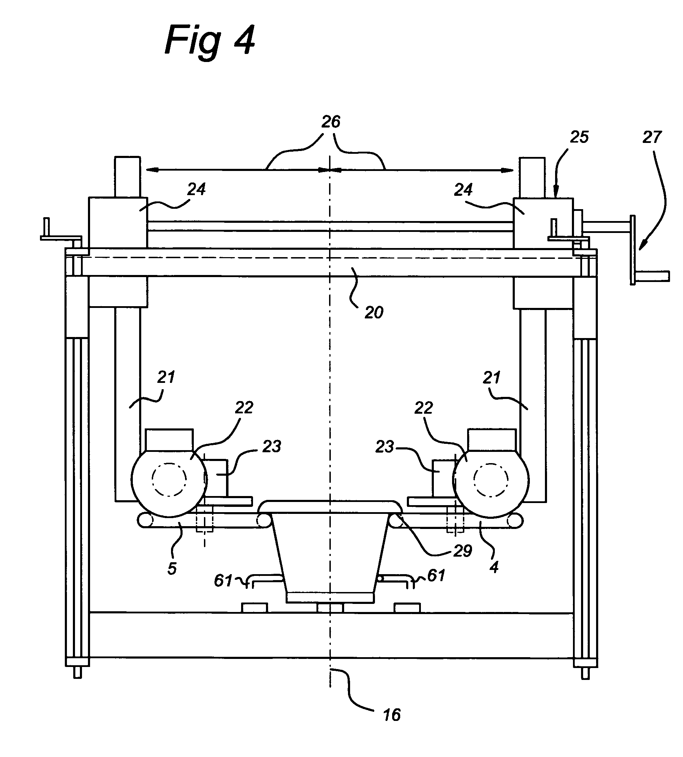

It can be seen from Fig. 4 that the belts are routed round and driven at the end of the device 1. For this purpose there are motors 22 with reduction gearing 23 by means of which belts 4 and 5, respectively, are driven and routed round in a manner that is not shown in more detail. Motors 22 are mounted via supports 21 and sliders 24 fixed thereto such that they can move on the frame 20 of the device. A movement in the direction of arrow 26 is possible with the sliders. This movement is achieved by means of a system 25 that engages on threading in sliders 24 that is not shown. System 25 can be driven with crank handle 27. Vibrator rods that engage on the side wall of the container 30 and which are made to vibrate with an eccentric construction are indicated by 61.

With this arrangement the construction is such that by operating handle 27 the two sliders 24 move towards one another or away from one another so that axis 16 always remains in the middle between the belts 4, 5. There is a corresponding construction, which may or may not be provided with motors 22, at the other end of the belts 4, 5, that is to say at station 2.

Apart from the facility for lateral adjustment of the belts 4 and 5 that has been described above, it is also possible to provide adjustability in the height direction, which can be constructed in the same way, that is to say such that both belts 4 and 5 are moved upwards or downwards to the same extent.

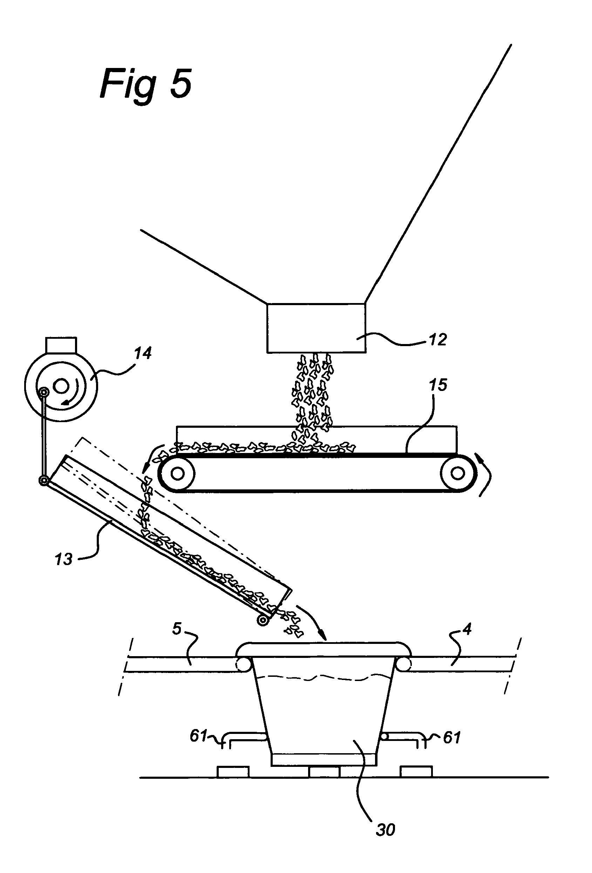

An alternative for station 9 is shown in Fig. 5. This is used in particular if loose material, such as bark material that has been shredded, has to be placed in containers. The outlet of feed conveyor 12 emerges at an auxiliary conveyor belt 15 that emerges in a shaking trough 13. Shaking movement of trough 13 is effected by motor 14.

By means of the present invention a pot can be filled along a path. With this arrangement several pots are filled at the same time during continuous movement of the conveyor, that is to say non-intermittent movement. As a result a high production rate can be achieved. Any material spilt between the pots can be recycled.

By means of the present invention it is possible to accommodate the containers between the belts in contact with one another, without gaps in the longitudinal direction. As a result, little material will be lost when introducing substrate. After all, recycling of material results in a deterioration of the quality of the substrate.

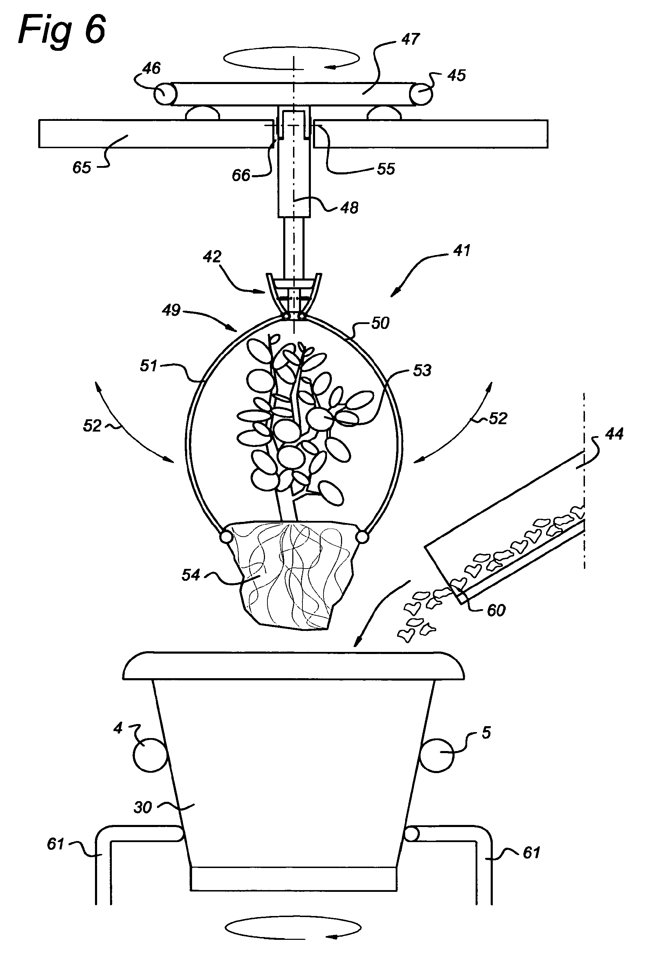

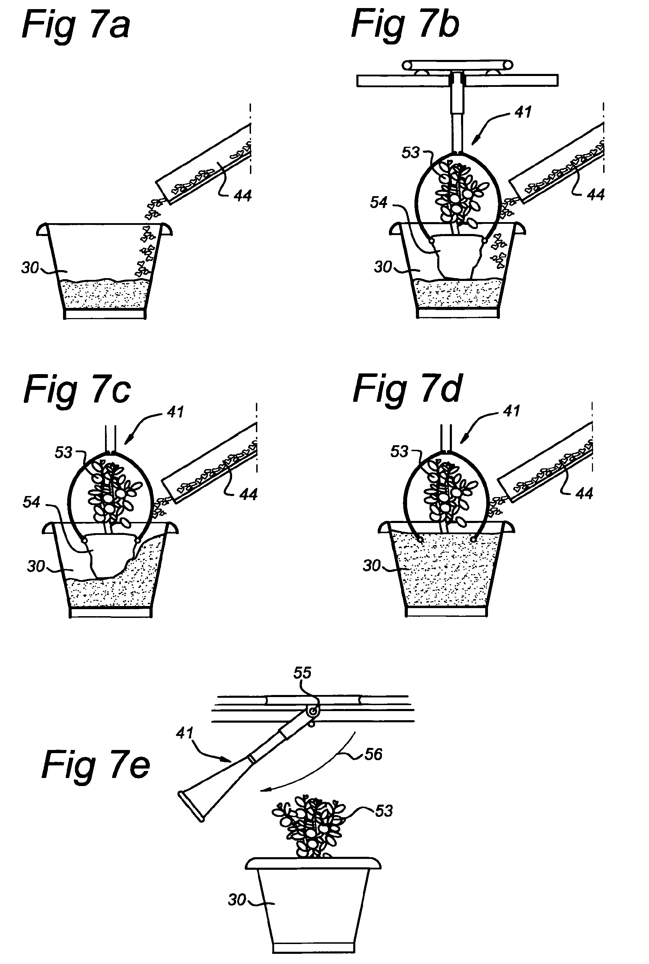

A variant of the invention is shown in Figs 6 and 7. As far as possible, corresponding parts have been provided with the same reference numerals.

In this case as well there is a filling station 9, but it is no longer necessary to use a drilling station 10 and downstream cutting insertion station 12. These are now integrated in the filling station 9. The various features are shown diagrammatically in Fig. 7, while structural details can be seen from Fig. 6.

In the manner described above the pot is driven with two belts 4 and 5. In contrast to the variant described above, the pot is no longer suspended by the rim on the belt but is restrained at a lower level by belts 4 and 5. The speed of movement of the belts 4 and 5 differs, as a result of which the pot executes a rotary movement. This can be achieved in that the belts 4 and 5 move in the same direction but at different speed, in that one of the belts 4 or 5 is stationary, or in that the belts 4 and 5 move in different directions at different speeds.

As a result of the rotary movement, good filling of soil material in the pots can be obtained. The outflow opening of filler funnel 44 used in this embodiment is indicated by 60 and extends close to the rim of the pot 30.

As can be seen from the figures, the cutting insertion station, which is directly above the filling station, is indicated by 41. This cutting insertion station consists of an engaging, moving and positioning member 42 for cuttings. This member 42 is mounted on a plate 65, which is stationary. Belts 45 and 46 or other transport members are fitted above this plate, which belts move in the same way as the belts 4 and 5, that is to say by this means a rotary conveying movement is applied in the same way to disc 47 that is joined to shaft 48 of the engaging, moving and positioning member 42 for cuttings and thus protrudes through a slot 66 in plate 65. Slot 66 extends over an appreciable length, for example a length that is equal to the length of five pots. At the end of shaft 48 a clamp 49 is fitted that consists of clamping parts 50 and 51 which can be moved towards one another in the direction of arrows 52 and can be moved apart again. The various features are constructed such that a plant 53 with roots 54 can be picked up between them. In addition, what can be achieved as a result of clamping is that the leaves of the plant 53 are compressed. The various actions, of course, take place without damage and it will be understood that the plant can be engaged in many other ways known in the state of the art. Shaft 48 is provided with a pivot 55 about which clamp 49 is able to move in the direction of arrow 56.

The variant in Figs 6 and 7 functions as follows:

An empty pot is placed in front of the outlet 60 in that this is linearly transported with some rotation by the belts 4 and 5. Soil is fed continuously via outlet 60. At the same time, as can be seen from Fig. 7a, the cutting insertion station 41 and more particularly the engaging, moving and positioning member for cuttings 42 thereof, is provided with a plant 30. A rotary movement and linear movement are also applied to this in the manner described above, which movements are completely synchronous with the movement of container 30.

It can be seen from Fig. 7b that after a first fill of the pot 30 with substrate plant 53 and more particularly the roots 54 thereof are lowered onto this bottom layer. Further soil is then added while both the container 30 and the plant turn synchronously during steps 7b-d. This is always effected from the side, so that no soil can get onto the leaves of the plant. In step e the plant has been placed in such a stable manner that support with an engaging, moving and positioning member for cuttings is no longer needed and this is tilted out of the way in the direction of arrow 56 according to Fig. 7e and is no longer effective.

With this variant if a larger pot, that is to say a pot of larger diameter, has to be filled only one of the belts, and preferably belt 4, is moved, as a result of which the position with respect to the outlet 60 remains unchanged.

Using this variant it is possible to place bulky plants in an attractive manner in a pot continuously while simultaneously filling with soil. As a result the length of the device can be shortened and appreciable saving in manpower can be achieved. The speed of rotation of the container and plant, respectively, can be restricted. In the case of a single outlet 60, it is in principle necessary only that the container executes a complete revolution. The vibratory means described above can also be present in order to compact the soil to some extent and position it correctly. It is also possible to use outlets opposite one another.

A particularly compact device can be obtained using this variant according to Figs 6 and 7.

After reading the above variants will be immediately apparent to those skilled in the art that the various stations can be constructed in the most diverse ways, whilst further stations can be added. The engaging, moving and positioning member 42 for cuttings can be constructed differently. Both the type and the location of grasping can differ. This applies, inter alia, if plant plugs are used, where the plug can be grasped. It is also possible to grasp a root ball or the stem of the plant. These and further modifications fall within the scope of the appended claims.

## Claims

1. Assembly comprising a device (1) for filling containers (30) with substrate (18), comprising a conveyor (3) for accommodating and moving containers past various stations (9-11), said stations comprise a substrate introduction station (9) for filling said containers with a substrate, wherein the outlet (12) of said substrate introduction station is above said conveyor, wherein said conveyor (3) comprises a linear conveyor, as well as containers (30), said conveyor being embodied to rotate containers during said linear movement, **characterized in that** said assembly comprises a cutting introduction station (11, 41) for introducing a cutting into the substrate placed in said container, said cutting introduction station (41) comprising a conveyor (45, 46) for cuttings that is provided adjacent to the substrate introduction station (9) and is provided with an engaging, moving and positioning member (42) for cuttings embodied to move linearly and synchronously with said linear conveyor (3) and wherein said engaging, moving and positioning member (42) for cuttings and said linear conveyor (3) can move towards one another.

2. Assembly according to Claim 1, wherein said conveyor (3) comprises two spaced apart driven belts (4, 5) for accommodating said containers (30) between them.

3. Assembly according to Claim 2, wherein the distance between said belts (4, 5) is adjustable in order to accommodate containers (30) of different size.

4. Assembly according to one of the preceding claims, comprising a drilling station (10) for making an opening (36) for receiving a plant in the substrate placed in the container (30).

5. Assembly according to one of the preceding claims, wherein said engaging, moving and positioning member (42) for cuttings is embodied to execute a rotary movement that is synchronous with the rotation applied to the container (30) by the transport member.

6. Assembly according to one of the preceding claims in combination with claim 4, wherein said stations (9-11) are arranged in line one after the other along said linear conveyor (3).

7. Assembly according to one of the preceding claims, wherein a vibrating device for containers is arranged at the location of said substrate introduction station (9).

## Patentansprüche

1. Anordnung, umfassend eine Vorrichtung (1), um Behälter (30) mit Substrat (18) zu füllen, umfassend eine Fördereinrichtung (3) zur Aufnahme und Bewegung von Behältern entlang verschiedener Stationen (9-11), wobei die Stationen eine Substrateinfüllstation (9) umfassen, um die Behälter mit einem Substrat zu füllen, wobei sich der Auslass (12) der Substrateinfüllstation oberhalb der Fördereinrichtung befindet, wobei die Fördereinrichtung (3) eine lineare Fördereinrichtung sowie Behälter (30) umfasst, wobei die Fördereinrichtung ausgebildet ist, um Behälter während einer linearen Bewegung zu drehen, **dadurch gekennzeichnet, dass** die Anordnung eine Steckling-Einführstation (11, 41) umfasst, um einen Steckling in das in dem Behälter enthaltene Substrat einzusetzen, wobei die Steckling-Einführstation (41) eine Fördereinrichtung (45, 46) für Stecklinge umfasst, die nahe der Substrateinfüllstation (9) bereitgestellt ist und ausgestattet ist mit einer Greif-, Bewegungs- und Positioniereinheit (42), um betreffende Stecklinge linear und synchron mit der linearen Fördereinrichtung (3) zu bewegen und wobei die Greif-, Bewegungs- und Positioniereinheit (42) für Stecklinge und die lineare Fördereinrichtung (3) aufeinander zubewegt werden können.

2. Anordnung gemäß Anspruch 1, wobei die Fördereinrichtung (3) zwei voneinander beabstandete Förderbänder (4, 5) umfasst, um die Behälter (30) zwischen ihnen aufzunehmen.

3. Anordnung gemäß Anspruch 2, wobei der Abstand zwischen den Bändern (4, 5) einstellbar ist, um Behälter (30) unterschiedlicher Größe aufzunehmen.

4. Anordnung gemäß einem der vorhergehenden Ansprüche, umfassend eine Bohrstation (10), um eine Öffnung (36) herzustellen, um eine Pflanze in dem Substrat aufzunehmen, das in dem Behälter (30) enthalten ist.

5. Anordnung gemäß einem der vorhergehenden Ansprüche, wobei die Greif-, Bewegungs- und Positioniereinheit (42) für Stecklinge ausgestaltet ist, eine Drehbewegung durchzuführen, welche synchron ist mit der Drehung, welche der Behälter (30) durch das Transportmittel erfährt.

6. Anordnung gemäß einem der vorhergehenden Ansprüche in Kombination mit Anspruch 4, wobei die Stationen (9-11) in einer Linie eine nach der anderen entlang der linearen Fördereinrichtung (3) angeordnet sind.

7. Anordnung gemäß einem der vorhergehenden Ansprüche, wobei eine Vibrationsvorrichtung für Behälter an der Stelle angeordnet ist, wo sich die Substrateinfüllstation (9) befindet.

## Revendications

1. Assemblage comprenant un dispositif (1) pour remplir des récipients (30) avec du substrat (18), comprenant un transporteur (3) pour loger et pour déplacer les récipients à travers différents postes de travail (9-11), lesdits postes de travail comprenant un poste de travail d'introduction de substrat (9) pour remplir lesdits récipients avec un substrat, dans lequel la sortie (12) dudit poste de travail d'introduction de substrat est située au-dessus dudit transporteur, dans lequel ledit transporteur (3) comprend un transporteur linéaire, ainsi que des récipients (30), ledit transporteur étant adapté à faire tourner les récipients pendant ledit déplacement linéaire, **caractérisé en ce que** ledit assemblage comprend un poste de travail d'introduction de boutures (11, 41) pour l'introduction d'une bouture au sein du substrat placé dans ledit récipient, ledit poste de travail d'introduction de boutures (41) comprenant un transporteur (45, 46) pour les boutures prévu adjacent au poste de travail d'introduction de substrat (9) et en étant muni d'un organe d'engagement, de déplacement et de positionnement (42) pour les boutures, adapté à se déplacer de façon linéaire et en synchronisation avec ledit transporteur linéaire (3) et dans lequel ledit organe d'engagement, de déplacement et de positionnement (42) pour les boutures et ledit transporteur linéaire (3) peuvent se déplacer l'un vers l'autre.

2. Assemblage selon la revendication 1, dans lequel ledit transporteur (3) comprend deux courroies entraînées et espacées l'une de l'autre (4, 5) pour loger lesdits récipients (30) entre les courroies.

3. Assemblage selon la revendication 2, dans lequel l'espacement entre lesdites courroies (4, 5) est réglable afin de pouvoir loger des récipients (30) de taille différente.

4. Assemblage selon l'une quelconque des revendications précédentes, comprenant un poste de travail de perçage (10) pour créer une ouverture (36) destinée à recevoir une plante au sein du substrat placé dans le récipient (30).

5. Assemblage selon l'une quelconque des revendications précédentes, dans lequel ledit organe d'engagement, de déplacement et de positionnement (42) pour les boutures est adapté à réaliser un déplacement rotatif qui est en synchronisation avec la rotation appliquée au récipient (30) au moyen de l'organe de transport.

6. Assemblage selon l'une quelconque des revendications précédentes en combinaison avec la revendication 4, dans lequel lesdits postes de travail (9-11) sont agencés en ligne, l'un après l'autre, le long dudit transporteur linéaire (3).

7. Assemblage selon l'une quelconque des revendications précédentes, dans lequel un dispositif vibratoire pour les récipients est agencé à l'emplacement dudit poste de travail d'introduction de substrat (9).
